(19) Europäisches Patentamt
European Patent Office
Office européen des brevets

(11) **EP 3 900 988 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **21167956.8**

(22) Anmeldetag: **13.04.2021**

(51) Internationale Patentklassifikation (IPC):
**B60T 8/17** (2006.01)     **B60T 8/1755** (2006.01)

(52) Gemeinsame Patentklassifikation (CPC):
**B60T 8/1708;** B60T 2201/04; B60T 2210/36

(54) **LANDWIRTSCHAFTLICHE FAHRZEUG-ANHÄNGER-KOMBINATION**

AGRICULTURAL VEHICLE TRAILER COMBINATION

COMBINAISON DE REMORQUE ET DE VÉHICULE AGRICOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2020 DE 102020205201**

(43) Veröffentlichungstag der Anmeldung:
**27.10.2021 Patentblatt 2021/43**

(60) Teilanmeldung:
**23185970.3 / 4 249 333**

(73) Patentinhaber: **Deere & Company**
**Moline, IL 61265 (US)**

(72) Erfinder: **BRITSCH, Sebastian**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(56) Entgegenhaltungen:
**EP-A1- 2 570 314         DE-A1- 102014 011 500**
**DE-A1- 102014 100 069    US-A1- 2018 334 152**

**Beschreibung**

Die Erfindung betrifft ein landwirtschaftliche Fahrzeug-Anhänger-Kombination gemäss dem Oberbegriff des unabhängigen Anspruchs 1.

Landwirtschaftliche Fahrzeug-Anhänger-Kombinationen mit einem Zugfahrzeug und einem Anhänger sind bekannt. Bei einer landwirtschaftliche Fahrzeug-Anhänger-Kombination kann das Zugfahrzeug, bevorzugt ein landwirtschaftliches Zugfahrzeug, besonders bevorzugt ein Traktor oder Schlepper, einen an das Zugfahrzeug koppelbaren und/oder anhängbaren bzw. gekoppelten und/oder angehängten Anhänger ziehen. Ein Anhänger kann beispielsweise ein Getreide- oder Rübenanhänger, ein Heuwagen, ein Rasenmäher, ein Feldhäcksler, eine Ballenpresse oder ein ähnliches Fahrzeug sein. Dabei ist vorgesehen, dass das Zugfahrzeug den nicht angetriebenen Anhänger zieht, da die Traktion des Zugfahrzeugs erforderlich ist, um eine Bewegung zu bewirken. Die landwirtschaftliche Fahrzeug-Anhänger-Kombination kann aber auch als eine zweiteilige Forst- oder Schneekombinationen ausgebildet sein. Ebenso kann auch unter einem Traktor, dessen Rahmen so angelenkt ist, dass dieser eine Lenkwirkung um einen Mittelpunkt ausübt, ein Zugfahrzeug mit Anhänger verstanden werden. Solche Fahrzeuge werden manchmal als "bidirektionale" Traktoren oder Gelenktraktoren bezeichnet. Beispiele für solche Traktoren mit relativ kleinen Rädern werden z.B. in der Grasbearbeitung und in der Forstwirtschaft; und sehr große Maschinen, manchmal mit Raupen als Bodeneingriffsmittel, werden auf großen Farmen verwendet.

Bei Fahrzeug-Anhänger-Kombinationen kann, da die Bremskraftübertragung über die Bodeneingriffsmittels des Zugfahrzeugs zum Boden begrenzt ist, bei Bremsvorgängen eine Instabilität, das Phänomen der Knickbewegung (engl. jack-knife), auftreten. In diesem Fall können vom Anhänger Kräfte auf das Fahrzeug ausgeübt werden, die in der Fahrzeug-Anhänger-Kombination zu einem übersteuerten Eigenlenkverhalten führen. Im Speziellen können diese Kräfte vom Anhänger, beispielsweise über eine Kupplung zwischen Zugfahrzeug und dem Anhänger oder bei einem Gelenktraktor über das Lenkgelenk von der hinteren Hälfte des Gelenkfahrwerks, auf das Zugfahrzeug ausgeübt werden. Das Phänomen kann insbesondere auftreten, wenn die Gesamt-Bremswirkung des Zugfahrzeugs höher ist als diejenige des Anhängerfahrzeugs, was beispielsweise sehr schnell auftreten kann, wenn ein beladener Anhänger an ein unbeladenes Zugfahrzeug gekoppelt wird. Zusätzlich muss der Bediener der Fahrzeug-Anhänger-Kombinationen die Situation sorgfältig abschätzen, um eine Knickbewegung zu vermeiden, da die Traktion auf trockenem Bodenbelag besser ist als auf rutschigem Bodenbelag. Fährt die Fahrzeug-Anhänger-Kombination auf einem Bodenbelag, auf welchem hohe Reibungskräfte zwischen den Bodeneingriffsmitteln und dem Bodenbelag wirken, kann die Kombination beispielsweise nur mit der Motorbremse über die Bodeneingriffsmittel des Fahrzeugs gebremst werden. Bei der Motorbremse wird durch das Getriebe eine komfortable und verschleißfreie Bremsung möglich, indem das Übertragungsverhältnis in Kombination mit dem Drehmoment des Motors erhöht wird. Auf einem Bodenbelag auf dem geringe Reibungskräfte zwischen den Bodeneingriffsmitteln und dem Bodenbelag wirken, müssen hingegen alle Bodeneingriffsmittel der Kombination gebremst werden, um eine optimale Bremswirkung ohne eine Kickbewegung du erreichen - dies würde die Betätigung der Betriebsbremse erfordern. Tritt der Fall einer Knickbewegung ein, kann die vom Anhänger ausgeübte Kraft die Haftung des Bodeneingriffsmittels des Zugfahrzeugs übersteigen, so dass die Fahrzeug-Anhänger-Kombination in eine Schwenk- oder sogar Schleudersituation gerät. Die Gefahr ist hierbei, dass, auch wenn keine Schleudersituation auftritt, der Fahrer die Fahrzeug-Anhänger-Kombination nicht mehr kontrollieren kann. Die DE 10 2014 011500 A1 und die DE 10 2014 100069 A1 offenbaren Fahrzeug-Anhänger Kombinationen, bei welchen die Anhängerbremse den Anhänger gerade nicht bei Betätigung oder bei betätigter Motorbremse und/oder Betriebsbremse des Zugfahrzeugs in Abhängigkeit vom Schlupf bremsen. Die US 2018/334152 A1 offenbart ein ABS für Anhänger.

Ausgehend von diesem Stand der Technik ist es daher eine Aufgabe der vorliegenden Erfindung eine landwirtschaftliche Fahrzeug-Anhänger-Kombination vorzuschlagen, welche die aus dem Stand der Technik bekannten Nachteile weitgehend vermeidet, insbesondere eine landwirtschaftliche Fahrzeug-Anhänger-Kombination mit einem Zugfahrzeug und einem Anhänger vorzuschlagen, die es ermöglicht das Bremsen der Fahrzeug-Anhänger-Kombination zu verbessern, um das Risiko einer Knickbewegung zu beseitigen oder zumindest zu verringern.

Diese Aufgabe wird durch eine landwirtschaftliche Fahrzeug-Anhänger-Kombination mit den Merkmalen des Anspruchs 1 gelöst.

Die abhängigen Ansprüche beziehen sich auf besonders vorteilhafte Ausführungsformen der Erfindung.

Erfindungsgemäß wird eine landwirtschaftliche Fahrzeug-Anhänger-Kombination mit einem Zugfahrzeug und einem Anhänger vorgeschlagen. Das Zugfahrzeug umfasst einen Motor und zumindest ein Bodeneingriffsmittel zur Abstützung auf einem Boden. Das Bodeneingriffsmittel ist dabei mittels eines Getriebes mit dem Motor antreibbar verbunden. Im Weiteren umfasst das Zugfahrzeug eine Betriebsbremse und das Zugfahrzeug ist mittels des Motors, also der Motorbremse, und/oder mittels der Betriebsbremse abbremsbar. Darüber hinaus umfasst das Zugfahrzeug einen Sensor und eine Steuereinheit, wobei mittels des Sensors und der Steuereinheit ein Schlupf $S$ oder ein Schlupfgradient VS am Bodeneingriffsmittel erfassbar und/oder ermittelbar ist, insbesondere ein Schlupf $S$ oder ein Schlupfgradient VS zwischen einem Boden und dem Bodeneingriffsmittel. Der Anhänger umfasst eine Anhängerbremse, wobei die Anhängerbremse mit der Steuereinheit einstellbar ist. Die Anhängerbremse ist mittels der Steuereinheit bei Betätigung oder bei betätigter Motorbremse und/oder Betriebsbremse des Zugfahrzeugs, insbesondere bei gleichzeitiger Betätigung oder bei gleichzeitig betätigter Motorbremse und/oder Betriebsbremse, derart einstellbar, dass der Anhänger mittels der Anhängerbremse in Abhängigkeit vom Schlupf $S$ und dem Schlupfgradienten VS gebremst wird, wenn der Schlupf $S$ einen vorgebbaren Schlupfbremswert $S_{Schwelle1}$ erreicht und/oder überschreitet und der Schlupfgradient $\nabla S$ bzw. $\overrightarrow{\nabla S}$ ein vorgebbares Schlupfgradienten-Bremsintervall $\nabla S_{Brems}$ bzw. $\overrightarrow{\nabla S_{Brems}}$ erreicht, insbesondere in einem vorgebbaren Schlupfgradienten-Bremsintervall $\nabla S_{Brems}$ bzw. $\overrightarrow{\nabla S_{Brems}}$ liegt. Das Schlupfgradienten-Bremsintervall $\nabla S_{Brems}$ kann dabei wie folgt definiert sein $\nabla S_{Brems} = [\nabla S_{Schwelle1}, \nabla S_{Schwelle2}]$, wird also von einem oberen Schlupfgradienten $\nabla S_{Schwelle2}$ und einem unteren Schlupfgradienten $\nabla S_{Schwelle1}$ begrenzt. In einer Vektorschreibweise kann das Schlupfgradienten-Bremsintervall $\overrightarrow{\nabla S_{Brems}}$ wie folgt definiert sein $\overrightarrow{\nabla S_{Brems}} = [\overrightarrow{\nabla S_{Schwelle1}}, \overrightarrow{\nabla S_{Schwelle2}}]$, wird also von einem oberen Schlupfgradienten $\overrightarrow{\nabla S_{Schwelle2}}$ und einem unteren Schlupfgradienten $\overrightarrow{\nabla S_{Schwelle1}}$ begrenzt.

Das Zugfahrzeug kann zwei-, drei- oder vier oder mehrere Bodeneingriffsmittel aufweisen. Die Bodeneingriffsmittel des Zugfahrzeug können Reifen und/oder eine Kette, insbesondere Gleiskette, und/oder Raupe sein. Im Weiteren kann der Motor des Zugfahrzeugs das oder die Bodeneingriffsmittel antreiben. Der Motor kann insbesondere zwei oder vier der Bodeneingriffsmittel antreiben. Das oder die Bodeneingriffsmittel können an einer Achse angeordnet, insbesondere gekoppelt sein, und die Achse mittels des Motors angetrieben oder antreibbar sein. Wenn das Zugfahrzeug mit vier am Boden angreifenden Bodeneingriffsmitteln, beispielsweise Rädern oder oben genannten anderen Elementen wie Ketten, ausgestattet ist, kann die Erfindung unabhängig davon verwendet werden, ob alle vier oder nur zwei der Bodeneingriffsmittel vom Zugfahrzeug angetrieben werden. Ein Zugfahrzeug kann ausserdem eine Fahrerkabine umfassen. Der Anhänger kann weitere Bodeneingriffsmittel umfassen, beispielsweise Reifen und/oder eine Kette, insbesondere Gleiskette, und/oder Raupe. Die Anhängerbremse kann zur Abbremsung der weiteren Bodeneingriffsmittel oder einer weiteren Achse, welche die Bodeneingriffsmittel verbindet, vorgesehen sein. Dabei können eine oder mehrere Anhängerbremsen vorgesehen sein, beispielsweise eine Anhängerbremse pro weiterem Bodeneingriffsmittel.

Die landwirtschaftliche Fahrzeug-Anhänger-Kombination kann einen oder mehrere Sensoren umfassen. Mittels des Sensors und der Steuereinheit kann ein Schlupf $S$ zwischen einem Boden und dem Bodeneingriffsmittel erfasst, insbesondere detektiert, und/oder ermittelt werden. Der oder die Sensoren, insbesondere mittels des oder der Sensoren, kann ein Parameter des Bodeneingriffsmittels erfasst, insbesondere detektiert, und/oder ermittelt werden. Im Speziellen kann mittels des oder der Sensoren eine Geschwindigkeit oder eine Drehzahl des Bodeneingriffsmittels erfasst, insbesondere detektiert, und/oder ermittelt werden. Im Speziellen kann für jedes Bodeneingriffsmittel je ein Sensor vorgesehen sein. Aus der Drehzahl der Bodeneingriffsmittel kann mittels der Steuereinheit die Geschwindigkeit der Bodeneingriffsmittel ermittelt werden. Ausserdem kann eine tatsächliche Geschwindigkeit der landwirtschaftliche Fahrzeug-Anhänger-Kombination, insbesondere des Zugfahrzeugs, vorliegen und/oder ermittelt und/oder gemessen werden. Anhand der aus der Drehzahl ermittelten Geschwindigkeit der Bodeneingriffsmittel oder der direkt gemessenen Geschwindigkeit des Bodeneingriffsmittel und der tatsächlichen Geschwindigkeit der landwirtschaftliche Fahrzeug-Anhänger-Kombination, insbesondere des Zugfahrzeugs, kann dann der Schlupf $S$ ermittelt werden. Mittels des Schlupfs S wiederum kann der Schlupfgradient VS ermittelt werden. Der Schlupf $S$ kann dabei als das Verhältnis der Drehzahl eines angetriebenen Rades n zu der eines (hypothetischen) nicht angetriebenen und daher formschlüssig mitlaufenden Rades $n_0$ dargestellt

werden $S = \frac{n - n_0}{n_0}$ . Somit kann mittels der Differenz bzw. dem Verhältnis der beiden Drehzahlen bzw. der Geschwindigkeiten der Schlupf $S$ und/oder anhand des Schlupfs S der Schlupfgradient VS, insbesondere ein bremsender Schlupf und/oder ein bremsender Schlupfgradient ermittelt werden. Die Steuereinheit kann den Schlupfgradient $\nabla S$ bzw. $\overrightarrow{\nabla S}$ beispielsweise aber auch anhand der Differenz zweier Schlüpfe $\overrightarrow{\nabla S} = \vec{S}_1 - \vec{S}_2$ und/oder betragsmässig $\nabla S = |\vec{S}_1 - \vec{S}_2|$

$$\nabla S = \frac{S_1 - S_2}{t_1 - t_2}$$

und/oder mittels der Differenz zweier Schlüpfe pro Zeiteinheit ermitteln, insbesondere berechnen. Der Schlupf $S$ und/oder der Schlupfgradient $\nabla S$ können mittels der Steuereinheit ermittelbar, insbesondere berechenbar sein. Bei schlupffreier Fahrt entspricht also die Geschwindigkeit des Zugfahrzeugs der Geschwindigkeit der Bodeneingriffsmittel. Ein bremsender Schlupf oder bremsender Schlupfgradient liegt vor, wenn die Geschwindigkeit der Bodeneingriffsmittel unterhalb der Geschwindigkeit des Zugfahrzeugs liegt. Das kann insbesondere bei Betätigung oder bei betätigter Motorbremse und/oder Betriebsbremse des Zugfahrzeugs der Fall sein.

Im Speziellen können der oder die Sensoren ein Sensorsignal für einen Parameter erzeugen oder generieren, insbesondere für die Drehzahl oder Geschwindigkeit der Bodeneingriffsmittel. Das Sensorsignal kann ausserdem vom Sensor an die Steuereinheit weitergeleitet und/oder von der Steuereinheit empfangen und verarbeitet werden. Die Steuereinheit kann mittels des Sensorsignals den Schlupf S ermitteln, insbesondere berechnen, und/oder mittels des Schlupfs S den Schlupfgradienten VS ermitteln, insbesondere berechnen, also insbesondere das Sensorsignal auswerten. Im Weiteren kann die Steuereinheit ein elektronisches Modul und/oder ein eingebettetes System sein und/oder ein Speichermodul und/oder einen Prozessor umfassen. Die Steuereinheit kann mit dem einen oder mehreren Sensoren und/oder dem Motor und/oder Getriebe und/oder der Anhängerbremse und/oder der Betriebsbremse und/oder weiteren Sensoren signalverbunden sein, also datenleitend verbunden sein. Die Verbindung kann kabelgebunden oder kabellos, also per Funk, realisiert sein. Der Kommunikationsbus kann beispielsweise Isobus, CAN-Bus oder ähnliches sein kann. Ausserdem kann mit die Fahrzeug-Anhänger-Kombination mittels der Steuereinheit und/oder einer weiteren Steuereinheit steuerbar und/oder regelbar sein. Die Steuereinheit und/oder weitere Steuereinheit (engl. ECU = electronic control unit oder ECM = electronic control module) kann ein elektronisches Modul und/oder ein eingebettetes System sein. Die Steuereinheit kann am Zugfahrzeug angeordnet sein oder zweiteilig am Zugfahrzeug und dem Anhänger angeordnet sein. Im Speziellen kann auch eine weitere Steuereinheit vorgesehen sein, sodass zwei Steuereinheiten, eine erste für das Zugfahrzeug und eine zweite für den Anhänger, vorgesehen sind. Die Steuereinheit kann dabei mit der weiteren Steuereinheit signalverbunden sein und/oder die Verbindung kann kabelgebunden oder kabellos, also per Funk, realisiert sein. Die Steuereinheit kann Signale an die weitere Steuereinheit versenden und von dieser empfangen. Ausserdem können der Sensor und/oder der Motor und/oder das Getriebe und/oder die Anhängerbremse mittels der Steuereinheit einstellbar sein oder eingestellt werden. Mit der Steuereinheit kann auch eine Bremskraft der Motorbremse und/oder der Betriebsbremse einstellbar sein.

Wesentlich für die Erfindung ist, dass die Stabilisierung der landwirtschaftliche Fahrzeug-Anhänger-Kombination bei betätigter oder bei Betätigung der Motorbremse und/oder der Betriebsbremse des Zugfahrzeugs in Abhängigkeit vom Schlupf S und/oder dem Schlupfgradienten VS mittels Abbremsen des Anhängers, insbesondere der Aktivierung der Anhängerbremse, in Abhängigkeit vom Schlupf S und/oder Schlupfgradienten VS erfolgt. Die Anhängerbremse wird aktiviert, also der Anhänger wird abgebremst, wenn der Schlupf S einen vorgebbaren Schlupfbremswert $S_{Schwelle\,1}$ erreicht und/oder überschreitet und/oder der Schlupfgradient VS ein vorgebbares Schlupfgradienten-Bremsintervall $\nabla S_{Brems}$ erreicht. Ist dies der Fall, können mittels der Anhängerbremse das oder die weiteren Bodeneingriffsmittel gebremst werden. Dabei kann insbesondere gelten, dass der vorgebbare Schlupfbremswert $S_{Schwelle1}$ grösser 0 ist. Der Anhänger wird also abgebremst, bevorzugt die Anhängerbremse aktiviert, besonders bevorzugt werden das oder die weiteren Bodeneingriffsmittel des Anhängers mittels der Anhängerbremse gebremst, wenn für den Schlupfwert S gilt:

$$S \geq S_{Schwelle1}, \text{ insbesondere mit } S_{Schwelle1} > 0$$

und/oder der Schlupfgradienten VS einen Wert aus dem Schlupfgradienten-Bremsintervall $\nabla S_{Brems}$ annimmt, also VS e $\nabla S_{Brems}$ gilt. Mit anderen Worten, der Sensor und die Steuereinheit des Zugfahrzeugs erfassen und/oder ermittelt den Schlupf S und/oder Schlupfgradienten VS zwischen dem Boden und dem Bodeneingriffsmittel. Die Steuereinheit ermittelt und/oder prüft, ob bei betätigter der Motorbremse und/oder der Betriebsbremse des Zugfahrzeugs der Schlupf S einen vorgebbaren Schlupfbremswert $S_{Schwelle1}$ erreicht und/oder überschreitet und/oder der Schlupfgradient VS das vorgebbare Schlupfgradienten-Bremsintervall $\nabla S_{Brems}$ erreicht, insbesondere im vorgebbaren Schlupfgradienten-Bremsintervall $\nabla S_{Brems}$ liegt. Ist dies der Fall, kann die Steuereinheit ein Brems-Anforderungssignal zur Ausgabe mindestens eines Anhänger-Bremssteuersignals an die Anhängerbremse zum Abbremsen des Anhängers ausgeben, d.h. die Anhängerbremse ist mittels der Steuereinheit derart einstellbar, insbesondere aktivierbar, dass der Anhänger mittels der Anhängerbremse, insbesondere das Bodeneingriffsmittel mittels der Anhängerbremse, gebremst wird. Im Speziellen kann die Anhängerbremse mittels der Steuereinheit derart einstellbar sein, dass der Anhänger mittels der Anhängerbremse in Abhängigkeit von einem bremsenden Schlupf, also einem negativen Schlupf $S$, und/oder von einem bremsenden Schlupfgradienten, also einem negativen Schlupfgradienten $\overrightarrow{\nabla S}$, gebremst wird, wenn der Betrag des bremsenden Schlupfs den vorgebbaren Schlupfbremswert $S_{Schwelle1}$ erreicht und/oder überschreitet und/oder der bremsende Schlupfgradient das vorgebbare Schlupfgradienten-Bremsintervall $\nabla S_{Brems}$ erreicht, insbesondere im vorgebbaren Schlupfgradienten-Bremsintervall $\nabla S_{Brems}$ liegt.

Die Bedingungen $S \geq S_{Schwelle1}$, insbesondere mit $S_{Schwelle1} > 0$, und/oder der Schlupfgradienten VS einen Wert aus dem Schlupfgradienten-Bremsintervall $\nabla S_{Brems}$ annimmt, also VS e $\nabla S_{Brems}$ gilt, unterscheiden sich wesentlich voneinander. Die Bedingung $S \geq S_{Schwelle1}$, insbesondere mit $S_{Schwelle1} > 0$, ist eine technisch einfach umzusetzende Bedingung für das Abbremsen des Anhängers. Die Bedingung VS e $\nabla S_{Brems}$ hingegen hat den Vorteil, dass, da der Schlupfgradient VS eine Änderungstendenz des Schlupfs S beschreibt, eine Voraussage über das Schlupfverhalten, also eine Aussage über die voraussichtliche Entwicklung des Schlupfs S ermöglicht wird.

Ein auf der Bedingung VS e $\nabla S_{Brems}$ basierende Abbremsung des Anhängers, hat im Gegensatz zu der alleinstehenden Bedingungen $S \geq S_{Schwelle1}$ den Vorteil, dass die Anhängerbremse und somit die abbremsende Kraft des Anhängers gezielt erst bei einer zu schnellen und/oder zu hohen Änderung des Schlupfs VS e $\nabla S_{Brems}$ aktiviert wird.

Die beiden Bedingungen können vorteilhafterweise auch kombiniert werden, d.h. der Anhänger wird abgebremst, also die Anhängerbremse aktiviert, wenn die Bedingungen $S \geq S_{Schwelle1}$ und VS e $\nabla S_{Brems}$ erfüllt sind. Eine auf der Kombination der Bedingungen $S > S_{Schwelle1}$ und VS e $\nabla S_{Brems}$ basierende Abbremsung des Anhängers wiederum, hat im Gegensatz zu der alleinstehenden Bedingungen $S > S_{Schwelle1}$ den Vorteil, dass die Anhängerbremse und somit die abbremsende Kraft des Anhängers gezielt erst bei einem zu hohen Schlupf $S$ in Kombination mit einer zu schnellen und/oder zu hohen Änderung des Schlupfs $S$ aktiviert wird. Dadurch kann, im Gegensatz zu der alleinstehenden Bedingungen $S > S_{Schwelle1}$, das Bremsverhalten, also das Abbremsen des Anhängers, insbesondere die Aktivierung der Anhängerbremse, auf den Bodenbelag (beispielsweise Asphalt oder Erde) und/oder die Oberflächeneigenschaften des Bodenbelags (Nasse oder trockene Oberfläche) angepasst werden. Insbesondere bei Darüber hinaus kann die Aktivierung der Anhängerbremse optimaler und genauer erfolgen, d.h. die Aktivierung der Anhängerbremse bei einem vorliegenden zu hohen Schlupf $S \geq S_{Schwelle1}$ erfolgt aufgrund der Verbindung mit einer Tendenz des Schlupfverhaltens auf Basis des Schlupfgradienten VS nur bei einer tatsächlich vorliegenden kritischen Situation, also bei $\nabla S \in \nabla S_{Brems}$.

Vorteilhaft für die Erfindung insgesamt ist, dass durch diese eine Verminderung der Schubwirkung und/oder Ausbildung einer Zugwirkung, also einer abbremsenden Kraft des Anhängers auf das Zugfahrzeug erfolgt. Alle drei möglichen Bedingungen verhindern somit, dass an der Fahrzeug-Anhänger-Kombination eine Knickbewegung auftritt und diese in eine Schwenk- oder sogar Schleudersituation gerät. Darüber hinaus erfolgt eine Verminderung der Schubwirkung und/oder Ausbildung einer Zugwirkung nicht bereits sobald ein Schlupf $S$ gemessen wird, also sobald gilt $S \neq 0$, sondern insbesondere erst dann, wenn gilt $S \geq S_{Schwelle1}$ und/oder VS e $\nabla S_{Brems}$. Dadurch kann die Anhängerbremse und somit die abbremsende Kraft des Anhängers gezielt aktiviert werden. Im Weiteren kann dadurch die Stabilisierung optimiert werden. Auch erfolgt die Stabilisierung der Fahrzeug-Anhänger-Kombination auf einfache Art und Weise, da das Abbremsen des Anhängers allein auf Basis des Schlupfs $S$ und/oder des Schlupfgradienten VS erfolgt. Es entfallen insbesondere auch komplexere Betrachtungen des Schlupfs $S$ und/oder des Schlupfgradienten VS des Anhängers. Von Vorteil ist auch die Unterscheidung zwischen Schlupf 5 und Schlupfgradienten VS. Das Bremsen des Anhängers in Abhängigkeit vom Schlupfgradient VS ermöglicht, im Gegensatz zur Abhängigkeit vom Schlupf $S$, eine genauere und feiner Abstimmung der Aktivierung der Anhängerbremse, insbesondere auf den Bodenbelag und/oder die Oberflächeneigenschaften des Bodenbelags, da mittels des Schlupfgradienten VS eine Aussage über die Entwicklung bzw. Tendenz des Schlupfs $S$ getroffen werden kann. Die Schubwirkung des Anhängers auf das Zugfahrzeug kann vorteilhafterweise vollständig aus Daten bzw. Signalen des Zugfahrzeugs bestimmt werden, beispielsweise als bremsender Schubbetrieb und/oder als Motorbremswirkung.

In Ausgestaltung der Erfindung ist die Steuereinheit derart betreibbar, insbesondere die Betriebsbremse und/oder die Anhängerbremse mit der Steuereinheit derart einstellbar, dass die Betriebsbremse und/oder die Anhängerbremse in Abhängigkeit vom Schlupf $S$ oder Schlupfgradienten VS gelöst werden, wenn der Schlupf $S$ einen vorgebbaren Schlupfblockierwert $S_{Schwelle2}$ erreicht und/oder überschreitet und/oder der Schlupfgradient VS ein vorgebbares Schlupfgradienten-Blockierintervall $\nabla S_{Blockier}$ mit $\nabla S_{Blockier} = [\nabla S_{Schwelle3}, \nabla S_{Schwelle4}]$, erreicht, insbesondere in einem vorgebbaren Schlupfgradienten-Blockierintervall liegt, also VS e $\nabla S_{Blockier}$ gilt. Hier können sowohl der Schlupfgradient VS, als auch das Schlupfgradienten-Blockierintervall, analog zur obigen Schreibweise auch in Vektordarstellung vorkommen. Die Betriebsbremse des Zugfahrzeugs sowie die Anhängerbremse können also gelöst werden, wenn entweder für den Schlupfwert S gilt $S \geq S_{Schwell2}$, insbesondere mit $S_{Schwell2} \geq 0$, und/oder für den Schlupfgradienten VS gilt VS e $\nabla S_{Blockier}$. Dabei kann insbesondere $S_{Schwelle2} > S_{Schwelle1}$ gelten, der Schlupfblockierwert $S_{Schwelle2}$ kann also insbesondere grösser als der Schlupfbremswert $S_{Schwelle1}$ sein. Es kann aber auch als eine Ausschlussbedingung überprüfbar sein, ob eine Antriebsschlupfregelung oder ein Stabilitätssystem am Zugfahrzeug aktiv ist und bei Vorliegen einer Antriebsschlupfregelung oder eines Stabilitätssystems am Zugfahrzeug die Anhängerbremse des Anhängerfahrzeugs nicht angesteuert werden kann bzw. nicht ansteuerbar ist. Das Stabilitätssystem kann insbesondere eine Fahrstabilitätsregelung sein und/oder, wie oben beschrieben, ein System sein, bei dem beispielsweise eine Betriebsbremse an einem oder mehreren Bodeneingriffsmitteln und/oder die Anhängerbremse an einem weiteren Bodeneingriffsmittel gelöst wird. Im Speziellen kann das Stabilitätssystem ein Antiblockiersystem (ABS) sein. Sowohl bei Vorliegen der Bedingungen $S \geq S_{Schwell2}$ und/oder $\nabla S \in \nabla S_{Blockier}$, als auch bei einer anderen Ausschlussbedingung, kann ein Aktivieren der Anhängerbremse, insbesondere ein Bremsen des Anhängers aus Sicherheitsgründen ausgeschlossen werden, um vorteilhafterweise durch eine Bremswirkung des Anhängers keine störenden Einflüsse hervorzurufen. Weiter ist von Vorteil, dass das gezielte Bremsen der Fahrzeug-Anhänger Kombination sowie eines Antriebsschlupfregelung und/oder ein Stabilitätssystem kombiniert werden können.

In Ausgestaltung der Erfindung ist der Sensor ein Geschwindigkeitssensor, wobei mit dem Geschwindigkeitssensor eine Geschwindigkeit der Bodeneingriffsmittel erfassbar ist und mittels der Steuereinheit aus der Geschwindigkeit, insbesondere der Drehzahl, ein Schlupf $S$ ermittelbar ist. Die Fahrzeug-Anhänger-Kombination, insbesondere das Zugfahrzeug, umfasst ein Positionsbestimmungssystem, insbesondere einen Radarsensor und/oder ein GPS-System. Der Sensor kann insbesondere auch ein Drehzahlsensor sein, wobei mit dem Drehzahlsensor eine Drehzahl des Bodeneingriffsmittels erfassbar und/oder detektierbar ist, und mittels der Steuereinheit aus der Drehzahl ein Schlupf $S$ ermittelbar ist. Der Geschwindigkeitssensor oder der Drehzahlsensor können ein Geschwindigkeitssignal oder ein Drehzahlsignal erzeugen, dieses an die Steuereinheit senden. Ausserdem kann mit dem Positionsbestimmungssystem, also dem GPS-System und/oder dem Radarsensor eine tatsächliche Geschwindigkeit der landwirtschaftliche Fahrzeug-Anhänger-Kombination, insbesondere des Zugfahrzeugs ermittelt bzw. gemessen werden und an die Steuereinheit übermittelt werden. Im Anschluss kann mittels der Steuereinheit der Schlupf $S$ zwischen Bodeneingriffsmittel und Boden aus der Geschwindigkeit oder der Drehzahl des Bodeneingriffsmittels, insbesondere dem Geschwindigkeitssignal oder dem Drehzahlsignal, und der tatsächlichen Geschwindigkeit ermittelt, insbesondere berechnet werden. Die Steuereinheit kann aus dem Schlupf $S$ einen Schlupfgradienten $\nabla S$ ermitteln, insbesondere berechnen. Die landwirtschaftliche Fahrzeug-Anhänger-Kombination kann einen oder mehrere Geschwindigkeitssensoren und/oder Drehzahlsensoren umfassen, insbesondere je ein Geschwindigkeitssensoren und/oder Drehzahlsensor pro Bodeneingriffsmittel. Der Drehzahlsensor kann die Drehzahl des Bodeneingriffsmittels erfassen und/oder detektieren, insbesondere ein Drehzahlsignal erzeugen. Der Geschwindigkeitssensor und/oder der Drehzahlsensor können mit der Steuereinheit signalverbunden sein. Die Steuereinheit kann den Schlupf $S$ aber auch aus der Drehzahl, insbesondere dem Drehzahlsignal, einer angetriebenen Achse des Zugfahrzeugs und einer weiteren Achse des Zugfahrzeugs ermitteln, insbesondere berechnen. Die tatsächliche Geschwindigkeit kann als Referenzgeschwindigkeit an der Steuereinheit vorliegen.

Von Vorteil können der Schlupf $S$ und/oder der Schlupfgradient $\nabla S$ so auf einfache Art und Weise ermittelt werden. Es kann auch vorgesehen sein, die Erfindung mit einer an sich bekannten Reifendruckregelanlagen zu kombinieren, so dass sich die Vorteile beider Systeme ergänzen. Wie eingangs schon erwähnt, wird hierbei darauf abgestellt, neben der Bremskraft des Anhängers auch den Reifendruck in Abhängigkeit von Schlupf 5 zu einzustellen bzw. zu verändern. Dies erfolgt im Rahmen der technischen Möglichkeiten bezüglich einer Evakuierung oder Befüllung einer entsprechenden Luftmenge an den Bodeneingriffsmitteln, insbesondere der Reifen. Es wird dabei vorgesehen, den Reifendruck anhand von gemittelten Schlupfwerten den herrschenden Bedingungen optimal anzupassen indem der Reifendruck situationsbedingt erhöht oder verringert wird, sodass eine Knickbewegung der Fahrzeug-Anhänger-Kombination vermieden wird.

In Ausgestaltung der Erfindung sind der Schlupfbremswert $S_{Schwelle1}$ und/oder das Schlupfgradienten-Bremsintervall $\nabla S_{Brems}$ und/oder Schlupfblockierwert $S_{Schwelle2}$ und/oder Schlupfgradienten-Blockierintervall $\nabla S_{Blockier}$ mittels der Steuereinheit ermittelbar, insbesondere berechenbar, und vorgebbar und/oder einstellbar, und/oder in der Steuereinheit, insbesondere auch in der weiteren Steuereinheit, ist eine mathematische Gleichung und/oder ein Kennfeld und/oder ein Messfeld abgelegt, durch welche einer oder mehrere der folgenden Parameter bei der Ermittlung des Schlupfbremswerts $S_{Schwelle1}$ und/oder des Schlupfgradienten-Bremsintervalls $\nabla S_{Brems}$ und/oder Schlupfblockierwerts $S_{Schwelle2}$ und/oder Schlupfgradienten-Blockierintervalls $\nabla S_{Blockier}$ berücksichtigbar sind: Reifenart und/oder Bodenart und/oder Bodenbeschaffenheit und/oder Geschwindigkeit und/oder Achslastverteilung und/oder Betätigung des Gaspedals und/oder der Motor erzeugt kein nutzbares Drehmoment und/oder ein Retardersystem ist aktiv und/oder das Zugfahrzeug befindet sich auf einer Gefällestrecke.

Der Schlupfbremswert $S_{Schwelle1}$ und/oder das Schlupfgradienten-Bremsintervall $\nabla S_{Brems}$ und/oder Schlupfblockierwert $S_{Schwelle2}$ und/oder Schlupfgradienten-Blockierintervall $\nabla S_{Blockier}$ können dadurch ermittelbar sein, dass die Schwellwerte und/oder Intervallgrenzen mittels der Steuereinheit ermittelbar sind.

Es kann beispielsweise für jeden Parameter die mathematische Gleichung und/oder das Kennfeld und/oder das Messfeld in der Steuereinheit und/oder der weiteren Steuereinheit abgelegt sein. Bei der Ermittlung des Schlupfbremswerts $S_{Schwelle1}$ und/oder des Schlupfgradienten-Bremsintervalls $\nabla S_{Brems}$ und/oder des Schlupfblockierwerts $S_{Schwelle2}$ und/oder des Schlupfgradienten-Blockierintervalls $\nabla S_{Blockier}$ mittels der Steuereinheit können dann einer oder mehrere der Parameter in die Berechnung der Schwellwerte, also $S_{Schwelle1}$ oder $S_{Schwelle2}$, und Intervallgrenzen, also $\nabla S_{Brems}$ oder $\nabla S_{Blocker}$, mit einfliessen, indem diese beispielsweise die Schwellwerte und/oder Intervallgrenzen nach oben oder unten korrigieren. Ebenso können einer oder mehrere der Parameter aber auch über weiteren Sensoren, beispielsweise einer Kamera und/oder eines Infrarotsensors und/oder Radarsensor etc., erfasst und als reelle Messwerte in Form eines Messfeldes in der Steuereinheit abgelegt sein. Dabei kann für jeden Parameter ein weiterer Sensor vorgesehen sein. Ferner ist es möglich, dass im Zugfahrzeug, insbesondere einer Eingabeeinrichtung, das inzwischen in der Landwirtschaft etablierte Positionsbestimmungssystem, insbesondere das GPS-System, integriert ist. Die Parameter können über eine elektronische Verbindung oder eine funkbasierte Verbindung, insbesondere im Zusammenspiel mit dem Positionsbestimmungssystem, vorgegeben und in der Steuereinheit abgelegt werden. Es können aber auch unterschiedliche Algorithmen zur Ermittlung und/oder Regelung des oder der Parameter Steuereinheit abgelegt sein. Darüber hinaus können auch Veränderungen und Variationen der oben genannten Parameter in dem wenigstens einen Kennfeld (oder in weiteren Kennfeldern, die in der einen oder beiden Steuereinheiten abgelegt sind) ihren Niederschlag finden, so dass beispielsweise die Reifenart berücksichtigt wird. Dabei kann die Bedienperson entsprechende Vorgaben wie Reifenhersteller, Reifengröße, Reifenbreite, Bauart, Profil, etc. mittels der Eingabeeinrichtung der einen oder beiden Steuereinheiten vorgeben, so dass ein entsprechender, die Reifenart berücksichtigender Algorithmus aufgerufen und der Steuerung und/oder Regelung der Anhängerbremse zugrunde gelegt wird. Vorteilhaftweise können so Parameter der Fahrzeug-Anhänger-Kombination, insbesondere des Zugfahrzeugs, in die Ermittlung, insbesondere Berechnung, und/oder Einstellung des Schlupfbremswert $S_{Schwelle1}$ und/oder das Schlupfgradienten-Bremsintervall $\nabla S_{Brems}$ und/oder der Schlupfblockierwert $S_{Schwelle2}$ und/oder das Schlupfgradienten-Blockierintervall $\nabla S_{Blockier}$ mittels der Steuereinheit mit einfliessen, sodass der Schlupfbremswert $S_{Schwelle1}$ und/oder das Schlupfgradienten-Bremsintervall $\nabla S_{Brems}$ und/oder der Schlupfblockierwert $S_{Schwelle2}$ und/oder das Schlupfgradienten-Blockierintervall $\nabla S_{Blockier}$ genauer und auf die Fahrzeug-Anhänger-Kombination angepasst ermittelt werden können.

In Ausgestaltung der Erfindung ist in der Steuereinheit, insbesondere auch in der weiteren Steuereinheit, ein Messfeld und/oder eine mathematische Gleichung und/oder ein Kennfeld abgelegt ist, durch welches einer oder mehrere der folgenden Parameter bei einer Steuerung und/oder Regelung der Fahrzeug-Anhänger-Kombination, insbesondere der Anhängerbremse berücksichtigbar sind: Reifenart und/oder Bodenart und/oder Bodenbeschaffenheit und/oder Geschwindigkeit und/oder Achslastverteilung und/oder Betätigung des Gaspedals und/oder der Motor erzeugt kein nutzbares Drehmoment und/oder ein Retardersystem ist aktiv und/oder das Zugfahrzeug befindet sich auf einer Gefällestrecke. Vorteilhaftweise kann so die Fahrzeug-Anhänger-Kombination derart gesteuert und/oder geregelt werden, dass eine Knickbewegung verhindert und das Auftreten einer Schwenk- oder sogar Schleudersituation vermieden wird.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1     eine schematische Darstellung eines ersten Ausführungsbeispiels der erfindungsgemässen landwirtschaftlichen Fahrzeug-Anhänger-Kombination, und

Fig. 2     eine schematische Schnittdarstellung des ersten Ausführungsbeispiels der erfindungsgemässen landwirtschaftlichen Fahrzeug-Anhänger-Kombination gemäss Figur 1 von oben, und

Fig. 3     eine schematische Schnittdarstellung eines zweiten Ausführungsbeispiels der erfindungsgemässen landwirtschaftlichen Fahrzeug-Anhänger-Kombination von oben, und

Fig. 4     eine schematische Darstellung eines dritten Ausführungsbeispiels der erfindungsgemässen landwirtschaftlichen Fahrzeug-Anhänger-Kombination von oben, und

Fig. 5     eine schematische Darstellung der Adhäsions-Schlupf-Kurve.

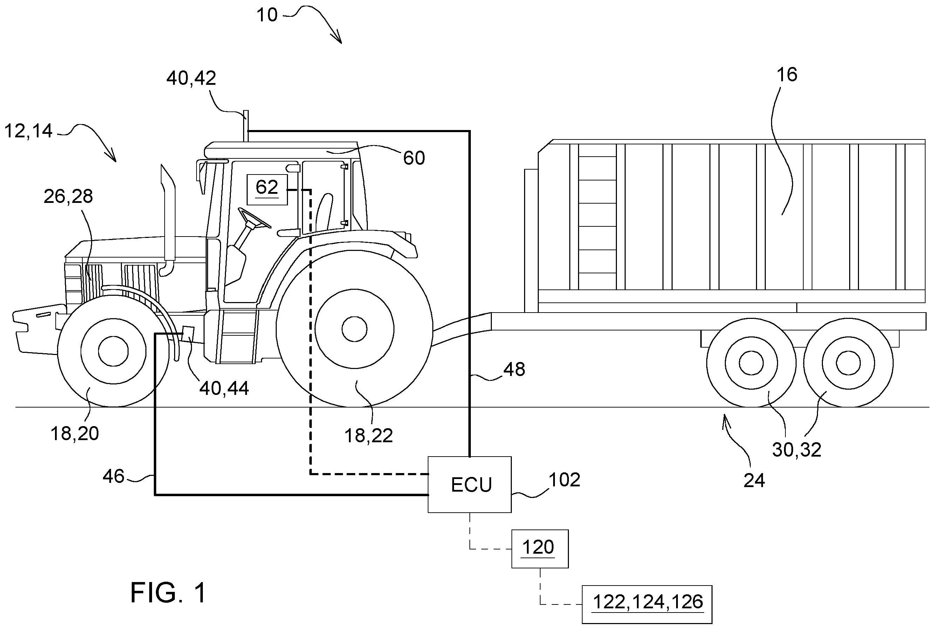

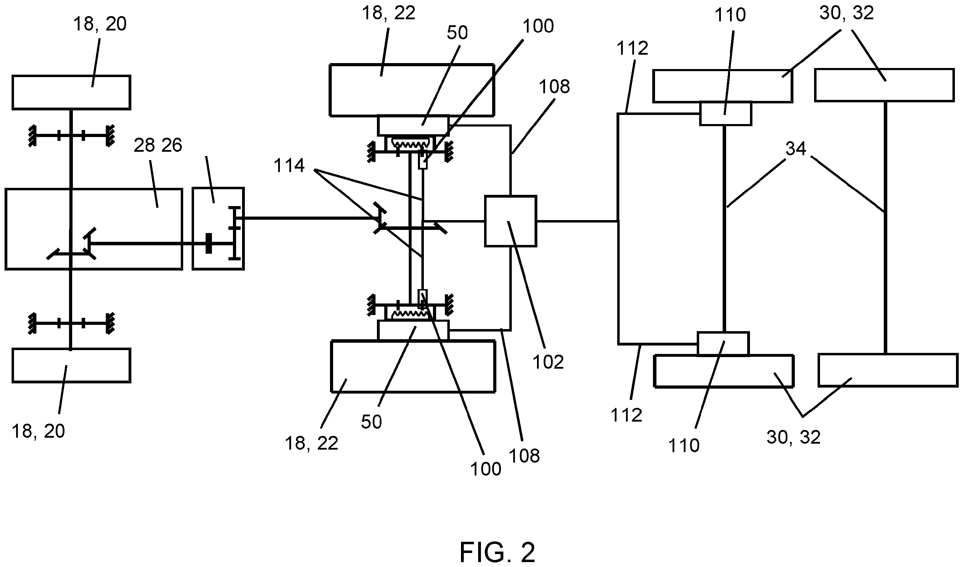

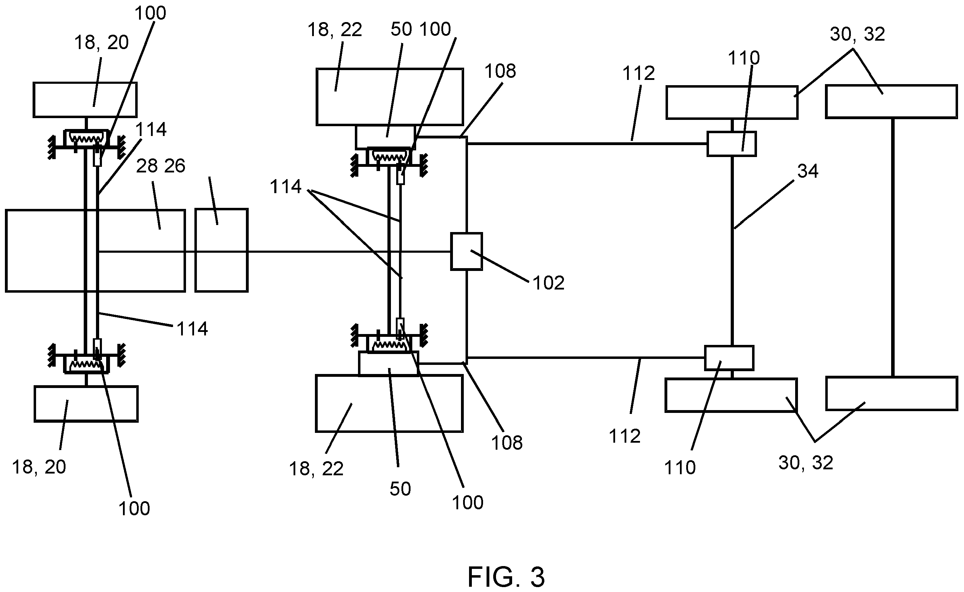

Die Figuren 1 und 2 zeigen eine schematische Darstellung (Fig. 1) und eine schematische Schnittdarstellung von oben (Fig. 2) eines ersten Ausführungsbeispiels einer erfindungsgemässen landwirtschaftlichen Fahrzeug-Anhänger-Kombination 10 mit einem Zugfahrzeug 12 in Form eines Traktors 14 und einem Anhänger 16. Die in den Figuren 3 bis 4 gezeigten zweiten und dritten Ausführungsbeispiele stimmen im Wesentlichen mit dem in den Figuren 1 und 2 gezeigten ersten Ausführungsbeispiel überein, sodass die folgende Beschreibung die Figuren 1 bis 4 beschreibt und auf die Unterschiede der verschiedenen Ausführungsbeispiele eingegangen wird.

Der Traktor 10 umfasst Bodeneingriffsmittel 18, hier Vorderräder 20 sowie Hinterräder 22, über die er sich auf einem Untergrund 24 (Boden, Straße, Feld) abstützt. Der Anhänger 16 umfasst weitere Bodeneingriffsmittel 30, die hier als Räder 32 ausgebildet sind. Die Bodeneingriffsmittel 18 des Zugfahrzeugs 12 sind mittels eines Getriebes 26 mit einem Motor 28 des Zugfahrzeugs 12 antreibbar verbunden. Dabei ist vorgesehen, dass das Zugfahrzeug 12 den nicht angetriebenen Anhänger 16 zieht, da die Traktion des Zugfahrzeugs 12 erforderlich ist, um eine Bewegung des Anhängers 16 zu bewirken. Im Weiteren stellt sich bei einem Fortbewegen des Zugfahrzeugs über den Untergrund zwischen Bodeneingriffsmittel 18 und Untergrund 24 ein Schlupf $S$ ein.

Das Zugfahrzeug 12 umfasst weiter eine Betriebsbremse (Bezugszeichen 50, siehe Figuren 2 bis 4). Das Zugfahrzeug 12 ist mittels des Motors 28, also einer Motorbremse, und/oder mittels der Betriebsbremse 50 abbremsbar. Das Zugfahrzeug 12 weist ausserdem einen oder auch mehrere Sensoren (Bezugszeichen 100, siehe Figuren 2 bis 4) und eine Steuereinheit 102 auf, wobei mittels des Sensors 100 und der Steuereinheit 102 ein Schlupf $S$ und/oder ein Schlupfgradienten VS am Bodeneingriffsmittel 18, insbesondere zwischen dem Untergrund 24 und dem Bodeneingriffsmittel 18, erfassbar und/oder ermittelbar ist. Die Sensoren 100 sind über Steuerleitungen 108 mit der Steuereinheit 102 verbunden, können aber auch auf andere bekannte Weise, beispielsweise mittels Funk, mit der Steuereinheit 102 verbunden sein.

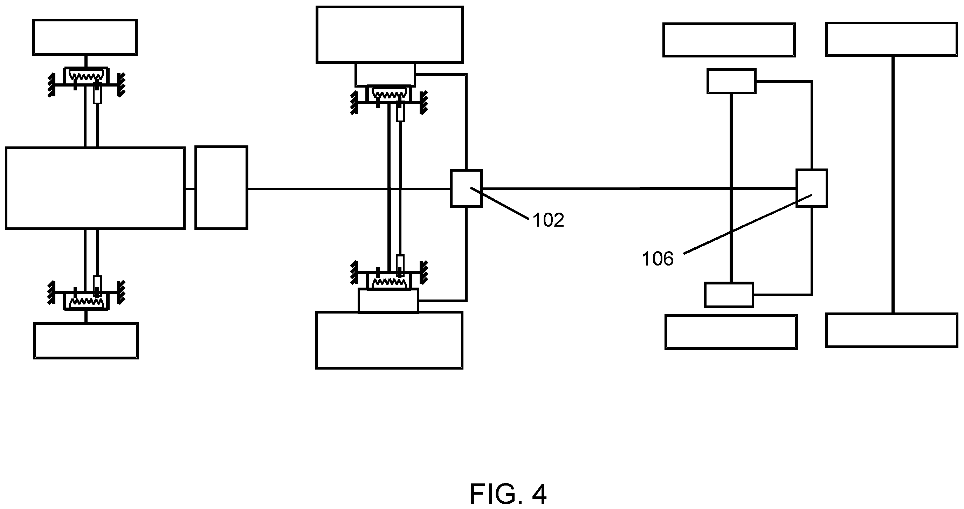

Der Anhänger 16 umfasst eine oder mehrere Anhängerbremsen (Bezugszeichen 110, siehe Figuren 2 bis 4), wobei die Anhängerbremsen 110 entweder über eine oder mehrere weitere Steuerleitungen 112, oder auch auf andere bekannte Weise, beispielsweise mittels Funk, mit der Steuereinheit 102 verbunden sind. Die Anhängerbremse 110 ist zur Abbremsung des oder der weiteren Bodeneingriffsmittel 30 vorgesehen, kann aber auch zur Abbremsung einer Anhängerachse (Bezugszeichen 34, siehe Figuren 2-4), welche die Bodeneingriffsmittel 30 verbindet, vorgesehen sein. Es kann ausserdem an jedem der Bodeneingriffsmittel 30 eine Anhängerbremse 110 vorgesehen sein. Die Anhängerbremse 110 ist mit der Steuereinheit 102 einstellbar. Die Anhängerbremse 110 ist dabei mittels der Steuereinheit 102 bei Betätigung oder bei betätigter Motorbremse und/oder Betriebsbremse 50 des Zugfahrzeugs 12 derart einstellbar, dass der Anhänger 16 mittels der Anhängerbremse 110 in Abhängigkeit vom Schlupf $S$ und dem Schlupfgradienten VS gebremst wird, wenn der Schlupf $S$ einen vorgebbaren Schlupfbremswert $S_{Schwelle1}$ erreicht und/oder überschreitet und der Schlupfgradient VS ein vorgebbares Schlupfgradienten-Bremsintervall $\nabla S_{Brems}$ erreicht insbesondere im vorgebbaren Schlupfgradienten-Bremsintervall $\nabla S_{Brems}$ liegt. Es kann dabei auch eine weitere Steuereinheit (Bezugszeichen 106, siehe Figur 4) vorgesehen sein, die insbesondere am Anhänger 16 angeordnet, bevorzugt diesem zugeordnet ist, sodass die Steuereinheit 102 ein Steuersignal an die weitere Steuereinheit 106 übermittelt und die weitere Steuereinheit 106 die Anhängerbremse 110 einstellt, insbesondere derart wie die Steuereinheit 102.

Die Fahrzeug-Anhänger-Kombination 10, insbesondere das Zugfahrzeug 12,14, kann ferner ein Positionsbestimmungssystem 40 umfassen, beispielsweise ein GPS-System 42 und/oder einen Radarsensor 44, das ebenfalls über entsprechende Steuerleitungen 46, 48, oder auch auf andere bekannte Weise, mit der Steuereinheit 102 verbunden sein kann.

Der Sensor 100 kann ein Geschwindigkeitssensor 104 sein. Mit dem Geschwindigkeitssensor kann eine Geschwindigkeit des oder der Bodeneingriffsmittel 18 erfassbar sein, insbesondere eine mit Schlupf $S$ behaftete Geschwindigkeit der landwirtschaftlichen Fahrzeug-Anhänger-Kombination 10, insbesondere des Zugfahrzeugs 12 ermittelt und/oder gemessen werden. Im Speziellen ist der Sensor 100 ein Drehzahlsensor 104, wobei mit dem Drehzahlsensor 104 eine Drehzahl des Bodeneingriffsmittels 18 erfassbar ist. Mit dem Drehzahlsensor 104 kann aber auch eine Drehzahl einer Zugfahrzeugachse 34 des Zugfahrzeugs 12 erfassbar sein. Im Speziellen sind mehrere Sensoren 100, insbesondere Drehzahlsensoren 104, an den Hinterrädern 22 (siehe Figuren 2 bis 4) und auch an den Vorderrädern 20 des Zugfahrzeugs 12 (siehe Figuren 3 bis 4) vorgesehen. Die Sensoren 100, 104 sind über weitere Steuerleitungen 114 mit der Steuereinheit 102 verbunden, können aber auch auf andere bekannte Weise, beispielsweise per Funk, mit der Steuereinheit 102 verbunden sein. Im Speziellen wird aus der Drehzahl der Bodeneingriffsmittel 18 die Geschwindigkeit der Bodeneingriffsmittel 18 ermittelt, beispielsweise mittels der Steuereinheit 102. Ausserdem kann mit dem Positionsbestimmungssystem 40, also dem GPS-System 42 und/oder dem Radarsensor 44 eine tatsächliche Geschwindigkeit der landwirtschaftliche Fahrzeug-Anhänger-Kombination 10, insbesondere des Zugfahrzeugs 12 ermittelt bzw. gemessen werden. Anhand der Drehzahl bzw. der Geschwindigkeit des Bodeneingriffsmittels 18 und der tatsächlichen Geschwindigkeit kann dann der Schlupf $S$ ermittelt werden. Mittels des Schlupfs $S$ wiederum kann der Schlupfgradient VS ermittelt werden. Der Schlupf $S$ und/oder der Schlupfgradient VS sind mittels der Steuereinheit 102 ermittelbar, insbesondere berechenbar. Im Speziellen wird also mittels einer Drehzahl oder Geschwindigkeit der Vorder- und/oder Hinterräder 18, 20, 22 des Zugfahrzeugs 12, einer tatsächlichen Drehzahl oder Geschwindigkeit der Vorder- und/oder Hinterräder 18, 20, 22 des Zugfahrzeugs 12 und insbesondere der geometrischen Abmessungen der Vorder- und/oder Hinterräder 18, 20, 22 des Zugfahrzeugs 12 eine mit Schlupf $S$ behaftete Geschwindigkeit und/oder der Schlupfgradient VS des Zugfahrzeugs 12 erfasst und erm ittelt.

Der Schlupf $S$ und/oder der Schlupfgradient VS werden zur Steuerung und/oder Regelung der Bremsung der landwirtschaftlichen Fahrzeug-Anhänger-Kombination 10 herangezogen. Es ist möglich, den Anhänger 16 mittels der Anhängerbremse 110 in Abhängigkeit von dem am Zugfahrzeug 12 erfassten Schlupf $S$ und/oder dem Schlupfgradienten VS abzubremsen. Vorteilhafterweise kann die durch die Steuereinheit 102 bereitgestellte Regelung der Schlupf $S$ wieder unterhalb des Schlupfbremswerts $S_{Schwelle1}$ gesenkt bzw. gehalten und/oder der Schlupfgradienten VS ausserhalb des Schlupfgradienten-Bremsintervalls $\nabla S_{Brems}$ gehalten werden, indem die Anhängerbremse 110 aktiviert und der Anhänger 16 gebremst wird. So kann insgesamt eine optimale Bremswirkung ohne eine Knickbewegung erreicht werden, insbesondere auch automatisch eingestellt werden.

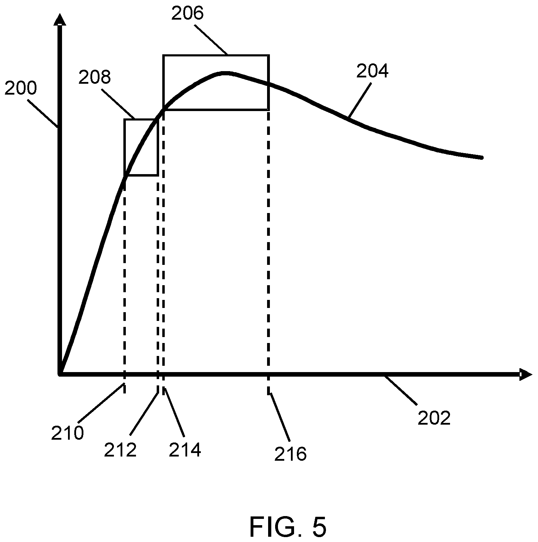

Die Steuereinheit 102, 106 kann auch derart betreibbar sein, insbesondere die Motorbremse und/oder die Betriebsbremse 50 und/oder die Anhängerbremse 110 mit der Steuereinheit 102, 106 derart einstellbar sein, dass die Motorbremse und/oder die Betriebsbremse 50 und/oder die Anhängerbremse 110 in Abhängigkeit vom Schlupf $S$ oder Schlupfgradienten $\nabla S$ gelöst wird, wenn der Schlupf $S$ einen vorgebbaren Schlupfblockierwert $S_{Schwelle2}$ (Bezugszeichen 214, Figur 5) erreicht und/oder überschreitet und/oder der Schlupfgradient VS ein vorgebbares Schlupfgradienten-Blockierintervall $\nabla S_{Blockier}$ mit $\nabla S_{Blockier} = [\nabla S_{Schwelle3}, \nabla S_{Schwelle4}]$, erreicht, insbesondere in einem vorgebbaren Schlupfgradienten-Blockierintervall liegt.

Das Zugfahrzeug 12 umfasst ferner eine Kabine 60, in der eine Eingabeeinrichtung 62 angeordnet sein kann, über die eine Bedienperson beispielsweise Angaben zum Schlupfbremswert $S_{Schwelle1}$ und/oder das Schlupfgradienten-Bremsintervall $\nabla S_{Brems}$ und/oder der Schlupfblockierwert $S_{Schwelle2}$ und/oder das Schlupfgradienten-Blockierintervall $\nabla S_{Blockier}$ eingeben kann. Die Eingabeeinrichtung 62 ist elektronisch über eine Eingabesteuerleitung 64 oder per Funk mit der Steuereinheit 102 verbunden.

Ebenso sind der Schlupfbremswert $S_{Schwelle1}$ und/oder das Schlupfgradienten-Bremsintervall $\nabla S_{Brems}$ und/oder der Schlupfblockierwert $S_{Schwelle2}$ und/oder das Schlupfgradienten-Blockierintervall $\nabla S_{Blockier}$ aber auch mittels der Steuereinheit 102, insbesondere auch in Abhängigkeit von den im folgenden beschriebenen Parametern der Fahrzeug-Anhänger-Kombination 10, ermittelbar, insbesondere berechenbar, und/oder vorgebbar und/oder einstellbar. Ausserdem kann in einer oder jeder der Steuereinheiten 102, 106 eine mathematische Gleichung 122, die insbesondere eine mathematischen und/oder physikalischen Zusammenhang beschreibt, und/oder ein Kennfeld 124, insbesondere ein allgemein gültiges Kennfeld, abgelegt sein. In der Steuereinheit 102, 106 kann aber auch ein Messfeld 126 abgelegt sein, welches einen oder mehrere über andere Sensoren erfasste reelle Messwerte der folgenden Parameter umfasst. Durch die in der Steuereinheit 102, 106 abgelegte mathematische Gleichung 122 und/oder das Kennfeld 124 und/oder das Messfeld 126 sind ein oder mehrere der folgenden Parameter bei der Ermittlung des Schlupfbremswert $S_{Schwelle1}$ und/oder das Schlupfgradienten-Bremsintervall $\nabla S_{Brems}$ und/oder der Schlupfblockierwert $S_{Schwelle2}$ und/oder das Schlupfgradienten-Blockierintervall $\nabla S_{Blockier}$ berücksichtigbar: Reifenart und/oder Bodenart und/oder Bodenbeschaffenheit und/oder Geschwindigkeit und/oder Achslastverteilung und/oder Betätigung des Gaspedals und/oder der Motor erzeugt kein nutzbares Drehmoment und/oder ein Retardersystem ist aktiv und/oder das Zugfahrzeug befindet sich auf einer Gefällestrecke. Ebenso sind mittels des in der Steuereinheit 102, 106 abgelegten Messfelds 126 und/oder der mathematischen Gleichung 122 und/oder des Kennfelds 124 einer oder mehrere der oben genannten Parameter bei einer Steuerung und/oder Regelung der landwirtschaftliche Fahrzeug-Anhänger-Kombination 10, insbesondere der Anhängerbremse 110, berücksichtigbar. Des Weiteren kann jede Steuereinheit 102, 106 ein Speichermodul 120 umfassen, insbesondere kann die Steuereinheit 102, 106 das Speichermodul 120 umfassen. Die mathematische Gleichung 122 und/oder das Kennfeld 124 und/oder das Messfeld 126 können im Speichermodul 120 abgelegt sein.

Figur 5 zeigt eine schematische Darstellung der Adhäsions-Schlupf-Kurve 204. Der im Folgende für Figur 5 beschriebene Sachverhalt gilt für alle erfindungsgemässen Ausführungsbeispiele, insbesondere für die Ausführungsbeispiele gemäss der Figuren 1 bis 4. Auf der Abszissenachse 202 ist der Schlupf S und auf der Ordinatenachse 200 ist die Adhäsion aufgetragen.

Die Anhängerbremse 110 wird aktiviert, insbesondere wird der Anhänger 16 mittels der Anhängerbremse 110 gebremst, wenn der Schlupf S den vorgebbaren Schlupfbremswert von $S_{Schwelle1}$ (Bezugszeichen 210) erreicht und/oder überschreitet. Darüber hinaus kann die Anhängerbremse 110 deaktiviert werden, insbesondere die Anhängerbremse 110 gelöst werden, wenn der Schlupf S einen ersten oberen Schwellwert $S_{Schwelle3}$ (Bezugszeichen 212) überschreitet. Für den Schlupf S gilt also ein Brems-Steuerbereich 208 für eine Aktivierung der Anhängerbremse 110 in Abhängigkeit vom Schlupf S in einem Intervall von $S_{Schwelle1} \leq S \leq S_{Schwelle3}$. Im Weiteren werden die Motorbremse und/oder die Betriebsbremse 50 und/oder die Anhängerbremse 110 gelöst, wenn der Schlupf S den vorgebbaren Schlupfblockierwert $S_{Schwelle2}$ (Bezugszeichen 214) erreicht und/oder überschreitet. Die Motorbremse und/oder die Betriebsbremse 50 und/oder die Anhängerbremse 110 können wieder aktiviert werden, wenn der Schlupf S einen zweiten oberen Schwellwert $S_{Schwelle4}$ (Bezugszeichen 216) überschreitet. Für den Schlupf S gilt also ein Anti-Blockier-Steuerbereich 206 für eine Deaktivierung der Motorbremse und/oder die Betriebsbremse 50 und/oder die Anhängerbremse 110 in Abhängigkeit vom Schlupf S in einem Intervall von $S_{Schwelle2} \leq S \leq S_{Schwelle4}$. Der Schlupfblockierwert $S_{Schwelle2}$ (Bezugszeichen 214) kann dabei grösser als der Schlupfbremswert $S_{Schwelle1}$ (Bezugszeichen 210) sein. Ausserdem kann gelten, dass der Schlupfblockierwert $S_{Schwelle3}$ (Bezugszeichen 214) und der erste obere Schwellwert $S_{Schwelle2}$ (Bezugszeichen 212) übereinstimmen, also $S_{Schwelle3} = S_{Schwelle2}$ gilt.

Ferner gilt für den Schlupfgradienten VS, dass die Anhängerbremse 110 aktiviert wird, wenn der Schlupfgradienten VS das vorgebbare Schlupfgradienten-Bremsintervall $\nabla S_{Brems}$ erreicht. Das vorgebbare Schlupfgradienten-Bremsintervall $\nabla S_{Brems}$ umfasst alle im Brems-Steuerbereich 208 zulässigen Schlupfgradienten VS. Umgekehrt gilt für die Motorbremse und/oder die Betriebsbremse 50 und/oder die Anhängerbremse 110, dass diese deaktiviert werden, wenn der Schlupfgradienten VS das vorgebbare Schlupfgradienten-Blockierintervall $\nabla S_{Blockier}$ erreicht. Das vorgebbare Schlupfgradienten-Blockierintervall $\nabla S_{Biockier}$ umfasst alle im Anti-Blockier-Steuerbereich 206 zulässigen Schlupfgradienten VS.

## Patentansprüche

1. Landwirtschaftliche Fahrzeug-Anhänger-Kombination mit einem Zugfahrzeug (12) und einem Anhänger (16), wobei das Zugfahrzeug (12) einen Motor (28) und zumindest ein Bodeneingriffsmittel (18, 20, 22) zur Abstützung auf einem Boden umfasst, und das Bodeneingriffsmittel (18, 20, 22) mittels eines Getriebes (26) mit dem Motor (28) antreibbar verbunden ist, wobei das Zugfahrzeug (12) eine Betriebsbremse (50) umfasst, und das Zugfahrzeug (12) mittels des Motors (28), also einer Motorbremse, und/oder mittels der Betriebsbremse (50) abbremsbar ist, und das Zugfahrzeug (12) einen Sensor (100, 104) und eine Steuereinheit umfasst, und mittels des Sensors (100, 104) und der Steuereinheit (102, 106) ein Schlupf (S) am Bodeneingriffsmittel (18, 20, 22) erfassbar und ermittelbar ist, und mit dem Schlupf (S) der Schlupfgradient VS ermittelbar ist, wobei der Anhänger (16) eine Anhängerbremse (110) umfasst, und die Anhängerbremse (110) mit der Steuereinheit (102, 106) einstellbar ist,
**dadurch gekennzeichnet, dass**
die Anhängerbremse (110) mittels der Steuereinheit (102, 106) bei Betätigung oder bei betätigter Motorbremse und/oder Betriebsbremse (50) des Zugfahrzeugs (12), derart einstellbar ist, dass der Anhänger (16) mittels der Anhängerbremse (110) in Abhängigkeit vom Schlupf (S) und dem Schlupfgradienten (VS) gebremst wird, wenn der Schlupf (S) einen vorgebbaren Schlupfbremswert ($S_{Schwelle1}$) erreicht oder überschreitet und der Schlupfgradient ($\nabla S$) ein vorgebbares Schlupfgradienten-Bremsintervall ($\nabla S_{Brems}$) erreicht.

2. Landwirtschaftliche Fahrzeug-Anhänger-Kombination nach Anspruch 1, **dadurch gekennzeichnet, dass** die Steuereinheit (102, 106) derart betreibbar ist, insbesondere die Betriebsbremse (50) und/oder die Anhängerbremse (110) mit der Steuereinheit (102, 106) derart einstellbar sind, dass die Betriebsbremse (50) und/oder die Anhängerbremse (110) in Abhängigkeit vom Schlupf (S) und/oder Schlupfgradienten (VS) gelöst werden, wenn der Schlupf (S) einen vorgebbaren Schlupfblockierwert ($S_{Schwelle2}$) erreicht und/oder überschreitet und/oder der Schlupfgradient (VS) ein vorgebbares Schlupfgradienten-Blockierintervall ($\nabla S_{Blockier}$) erreicht.

3. Landwirtschaftliche Fahrzeug-Anhänger-Kombination nach Anspruch 2, **dadurch gekennzeichnet, dass** der Schlupfblockierwert ($S_{Schwelle2}$) grösser als der Schlupfbremswert ($S_{Schwelle1}$) ist.

4. Landwirtschaftliche Fahrzeug-Anhänger-Kombination nach mindestens einem der vorangehenden Ansprüche, **dadurch gekennzeichnet, dass** der Sensor (100, 104) ein Geschwindigkeitssensor (104) ist, wobei mit dem Geschwindigkeitssensor (104) eine Geschwindigkeit des Bodeneingriffsmittels (18, 20, 22) erfassbar ist, und mittels der Steuereinheit (102, 106) aus der Geschwindigkeit ein Schlupf (S) ermittelbar ist.

5. Landwirtschaftliche Fahrzeug-Anhänger-Kombination nach mindestens einem der vorangehenden Ansprüche, **dadurch gekennzeichnet, dass** die Fahrzeug-Anhänger-Kombination (10), insbesondere das Zugfahrzeug (12), ein Positionsbestimmungssystem (40, 42, 44), insbesondere einen Radarsensor (44) und/oder ein GPS-System (42) umfasst.

6. Landwirtschaftliche Fahrzeug-Anhänger-Kombination nach mindestens einem der vorangehenden Ansprüche, **dadurch gekennzeichnet, dass** der Schlupfbremswert ($S_{Schwelle1}$) und/oder das Schlupfgradienten-Bremsintervall ($\nabla S_{Brems}$) und/oder Schlupfblockierwert ($S_{Schwelle2}$) und/oder Schlupfgradienten-Blockierintervall ($\nabla S_{Blockier}$) mittels der Steuereinheit (102, 106) ermittelbar und vorgebbar sind, und/oder in der Steuereinheit (102, 106) eine mathematische Gleichung (122) und/oder ein Kennfeld (124) und/oder ein Messfeld (126) abgelegt ist, durch welche einer oder mehrere der folgenden Parameter bei der Ermittlung der Schlupfbremswert ($S_{Schwelle1}$) und/oder das Schlupfgradienten-Bremsintervall ($\nabla S_{Brems}$) und/oder der Schlupfblockierwert ($S_{Schwelle2}$) und/oder Schlupfgradienten-Blockierintervall ($\nabla S_{Blockier}$) berücksichtigbar sind:

- Reifenart
- Bodenart
- Bodenbeschaffenheit
- Geschwindigkeit
- Achslastverteilung
- Betätigung des Gaspedals,
- der Motor (28) erzeugt kein nutzbares Drehmoment,
- ein Retardersystem ist aktiv,
- das Zugfahrzeug (12) befindet sich auf einer Gefällestrecke.

7. Landwirtschaftliche Fahrzeug-Anhänger-Kombination nach mindestens einem der vorangehenden Ansprüche, **dadurch gekennzeichnet, dass** in der Steuereinheit (102, 106) ein Messfeld (126) und/oder eine mathematische Gleichung (122) und/oder ein Kennfeld (124) abgelegt ist, durch welche einer oder mehrere der folgenden Parameter bei einer Steuerung und/oder Regelung der Anhängerbremse (110) berücksichtigbar sind:

- Reifenart
- Bodenart
- Bodenbeschaffenheit
- Geschwindigkeit
- Achslastverteilung
- Betätigung des Gaspedals,
- der Motor (28) erzeugt kein nutzbares Drehmoment,
- ein Retardersystem ist aktiv,
- das Zugfahrzeug (12) befindet sich auf einer Gefällestrecke.

**Claims**

1. Agricultural vehicle-trailer-combination comprising a traction vehicle (12) and a trailer (16), wherein the traction vehicle (12) comprises an engine (28) and at least one ground engagement means (18, 20, 22) for support on a ground surface, and the ground engagement means (18, 20, 22) is connected in terms of drive to the engine (28) by means of a transmission (26), wherein the traction vehicle (12) comprises a service brake (50) and the traction vehicle (12) is able to be braked by means of the engine (28), i.e. an engine brake, and/or by means of the service brake (50), and the traction vehicle (12) comprises a sensor (100, 104) and a control unit and by means of the sensor (100, 104) and the control unit (102, 106) a slip ($S$) on the ground engagement means (18, 20, 22) may be sensed and determined and the slip gradient $\nabla S$ may be determined with the slip (S), wherein the trailer (16) comprises a trailer brake (110) and the trailer brake (110) is adjustable by the control unit (102, 106),
   **characterized in that**
   the trailer brake (110) is adjustable by means of the control unit (102, 106) when the engine brake and/or service brake (50) of the traction vehicle (12) are actuated or during the actuation thereof, such that the trailer (16) is braked by means of the trailer brake (110) as a function of the slip ($S$) and the slip gradient ($\nabla S$) when the slip ($S$) reaches or exceeds a predeterminable slip braking value ($S_{threshold1}$) and the slip gradient ($\nabla S$) reaches a predeterminable slip gradient braking interval ($\nabla S_{braking}$).

2. Agricultural vehicle-trailer-combination according to Claim 1, **characterized in that** the control unit (102, 106) is able to be operated, in particular the service brake (50) and/or the trailer brake (110) are adjustable by the control unit (102, 106), such that the service brake (50) and/or the trailer brake (110) are released as a function of the slip ($S$) and/or slip gradient ($\nabla S$) when the slip ($S$) reaches and/or exceeds a predeterminable slip blocking value ($S_{threshold2}$) and/or the slip gradient ($\nabla S$) reaches a predeterminable slip gradient blocking interval ($\nabla S_{blocking}$).

3. Agricultural vehicle-trailer-combination according to Claim 2, **characterized in that** the slip blocking value ($S_{threshold2}$) is greater than the slip braking value ($S_{threshold1}$).

4. Agricultural vehicle-trailer-combination according to at least one of the preceding claims, **characterized in that** the sensor (100, 104) is a speed sensor (104), wherein a speed of the ground engagement means (18, 20, 22) may be sensed by the speed sensor (104) and a slip ($S$) may be determined from the speed by means of the control unit (102, 106).

5. Agricultural vehicle-trailer-combination according to at least one of the preceding claims, **characterized in that** the vehicle-trailer-combination (10), in particular the traction vehicle (12), comprises a position determining system (40, 42, 44), in particular a radar sensor (44) and/or a GPS system (42).

6. Agricultural vehicle-trailer-combination according to at least one of the preceding claims, **characterized in that** the slip braking value ($S_{threshold1}$) and/or the slip gradient braking interval ($\nabla S_{braking}$) and/or slip blocking value ($S_{threshold2}$) and/or slip gradient blocking interval ($\nabla S_{blocking}$) may be determined and predetermined by means of the control unit (102, 106), and/or a mathematical equation (122) and/or a characteristic diagram (124) and/or a measuring field (126) is stored in the control unit (102, 106), by which one or more of the following parameters may be taken into consideration when determining the slip braking value ($S_{threshold1}$) and/or the slip gradient braking interval ($\nabla S_{braking}$) and/or the slip blocking value ($S_{threshold2}$) and/or slip gradient blocking interval ($\nabla S_{blocking}$):

   - tyre type
   - ground type
   - ground conditions
   - speed
   - axle load distribution
   - actuation of the gas pedal
   - the engine (28) generates no useful torque
   - a retarder system is active
   - the traction vehicle (12) is located on a sloping section.

7. Agricultural vehicle-trailer-combination according to at least one of the preceding claims, **characterized in that** a measuring field (126) and/or a mathematical equation (122) and/or a characteristic diagram (124) is stored in the control unit (102, 106), by which one or more of the following parameters may be taken into consideration during a control and/or regulation of the trailer brake (110):

- tyre type
- ground type
- ground conditions
- speed
- axle load distribution
- actuation of the gas pedal
- the engine (28) generates no useful torque
- a retarder system is active
- the traction vehicle (12) is located on a sloping section.

**Revendications**

1. Combinaison véhicule-remorque agricole avec un véhicule tracteur (12) et une remorque (16), le véhicule tracteur (12) comprenant un moteur (28) et au moins un moyen d'engagement au sol (18, 20, 22) pour s'appuyer sur un sol, et le moyen d'engagement au sol (18, 20, 22) étant relié au moteur (28) de manière à pouvoir être entraîné au moyen d'une transmission (26), le véhicule tracteur (12) comprenant un frein de service (50), et le véhicule tracteur (12) pouvant être freiné au moyen du moteur (28), c'est-à-dire d'un frein moteur, et/ou au moyen du frein de service (50), et le véhicule tracteur (12) comprenant un capteur (100, 104) et une unité de commande, et au moyen du capteur (100, 104) et de l'unité de commande (102, 106), un glissement (S) pouvant être détecté et déterminé sur le moyen d'engagement au sol (18, 20, 22), et le gradient de glissement $\nabla S$ pouvant être déterminé avec le glissement (S), la remorque (16) comprenant un frein de remorque (110), et le frein de remorque (110) pouvant être réglé avec l'unité de commande (102, 106),
   **caractérisée en ce que**
   le frein de remorque (110) peut être réglé au moyen de l'unité de commande (102, 106) lors de l'actionnement ou lorsque le frein moteur et/ou le frein de service (50) du véhicule tracteur (12) est actionné, de telle sorte que la remorque (16) est freinée au moyen du frein de remorque (110) en fonction du glissement $(S)$ et du gradient de glissement ($\nabla S$) lorsque le glissement (S) atteint ou dépasse une valeur de freinage de glissement ($S_{seuil1}$) prédéfinissable et que le gradient de glissement ($\nabla S$) atteint un intervalle de freinage de gradient de glissement ($\nabla S_{frein}$) prédéfinissable.

2. Combinaison véhicule-remorque agricole selon la revendication 1, **caractérisée en ce que** l'unité de commande (102, 106) peut être actionnée de telle sorte, notamment le frein de service (50) et/ou le frein de remorque (110) peuvent être réglés avec l'unité de commande (102, 106) de telle sorte, que le frein de service (50) et/ou le frein de remorque (110) sont desserrés en fonction du glissement (S) et/ou du gradient de glissement ($\nabla S$) lorsque le glissement (S) atteint et/ou dépasse une valeur de blocage de glissement ($S_{seuil2}$) prédéfinissable et/ou que le gradient de glissement (VS) atteint un intervalle de blocage de gradient de glissement ($\nabla S_{blocage}$) prédéfinissable.

3. Combinaison véhicule-remorque agricole selon la revendication 2, **caractérisée en ce que** la valeur de blocage de glissement ($S_{seuil2}$) est supérieure à la valeur de freinage de glissement ($S_{seuil1}$).

4. Combinaison véhicule-remorque agricole selon au moins l'une quelconque des revendications précédentes, **caractérisée en ce que** le capteur (100, 104) est un capteur de vitesse (104), le capteur de vitesse (104) permettant de détecter une vitesse du moyen d'engagement au sol (18, 20, 22), et l'unité de commande (102, 106) permettant de déterminer un glissement (S) à partir de la vitesse.

5. Combinaison véhicule-remorque agricole selon au moins l'une quelconque des revendications précédentes, **caractérisée en ce que** la combinaison véhicule-remorque (10), notamment le véhicule tracteur (12), comprend un système de détermination de position (40, 42, 44), notamment un capteur radar (44) et/ou un système GPS (42) .

6. Combinaison véhicule-remorque agricole selon au moins l'une quelconque des revendications précédentes, **caractérisée en ce que** la valeur de freinage de glissement ($S_{seuil1}$) et/ou l'intervalle de freinage de gradient de glissement ($\nabla S_{frein}$) et/ou la valeur de blocage de glissement ($S_{seuil2}$) et/ou l'intervalle de blocage de gradient de glissement ($\nabla S_{blocage}$) peuvent être déterminés et prédéfinis au moyen de l'unité de commande (102, 106), et/ou une équation mathématique (122) et/ou un champ caractéristique (124) et/ou un champ de mesure (126) est enregistré dans l'unité de commande (102, 106), grâce auxquels un ou plusieurs des paramètres suivants peuvent être pris en compte lors de la détermination de la valeur de freinage de glissement ($S_{seuil1}$) et/ou de l'intervalle de freinage de gradient de glissement ($\nabla S_{frein}$) et/ou de la valeur de blocage de glissement ($S_{seuil2}$) et/ou de l'intervalle de blocage de gradient de glissement ($\nabla S_{blocage}$) :

- le type de pneu,
- le type de sol,
- la nature du sol,
- la vitesse,
- la répartition de la charge sur les essieux,
- l'actionnement de la pédale d'accélérateur,
- le moteur (28) ne produit pas de couple utilisable,
- un système de ralentisseur est actif,
- le véhicule tracteur (12) se trouve sur une route en pente.

7. Combinaison véhicule-remorque agricole selon au moins l'une quelconque des revendications précédentes, **caractérisée en ce que** un champ de mesure (126) et/ou une équation mathématique (122) et/ou un champ caractéristique (124) est enregistré dans l'unité de commande (102, 106), grâce auxquels un ou plusieurs des paramètres suivants peuvent être pris en compte lors d'une commande et/ou d'une régulation du frein de remorque (110) :

- le type de pneu,
- le type de sol,
- la nature du sol,
- la vitesse,
- la répartition de la charge sur les essieux,
- l'actionnement de la pédale d'accélérateur,
- le moteur (28) ne produit pas de couple utilisable,
- un système de ralentisseur est actif,
- le véhicule tracteur (12) se trouve sur une route en pente.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014011500 A1
- DE 102014100069 A1

- US 2018334152 A1